(19) Europäisches Patentamt
European Patent Office
Office européen des brevets

(11) **EP 4 708 235 A1**

(12) **EUROPEAN PATENT APPLICATION**

(43) Date of publication:
**11.03.2026 Bulletin 2026/11**

(21) Application number: **25198590.9**

(22) Date of filing: **28.08.2025**

(51) International Patent Classification (IPC):
**G07D 7/00** *(2016.01)* **G07D 7/1205** *(2016.01)*

(52) Cooperative Patent Classification (CPC):
**G07D 7/1205; G07D 7/003**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.08.2024 JP 2024149979**

(71) Applicant: **GLORY LTD.**
**Himeji-shi**
**Hyogo 670-8567 (JP)**

(72) Inventor: **SATO, Takeshi**
**Hyogo, 670-8567 (JP)**

(74) Representative: **SSM Sandmair**
**Patentanwälte Rechtsanwalt**
**Partnerschaft mbB**
**Joseph-Wild-Straße 20**
**81829 München (DE)**

(54) **SHEET RECOGNITION UNIT, SHEET HANDLING DEVICE, SHEET RECOGNITION METHOD, AND SHEET RECOGNITION PROGRAM**

(57) Provided are a sheet recognition unit, a sheet handling device, a sheet recognition method, and a sheet recognition program capable of recognizing a sheet having high security using a photoluminescent compound. A sheet recognition unit includes a light source capable of emitting at least ultraviolet light to a sheet to be recognized, a light receiving unit that receives photoluminescence emitted from the sheet to be recognized, the sheet being irradiated with the ultraviolet light, and outputs a photoluminescence detection signal, and a recognition unit that recognizes the sheet to be recognized using the photoluminescence detection signal output from the light receiving unit, based on whether a visible photoluminescence emission amount and an infrared photoluminescence emission amount of the sheet to be recognized are within an allowable range with respect to reference data related to a visible photoluminescence emission amount and an infrared photoluminescence emission amount in a genuine sheet.

FIG.1

R

**Description**

TECHNICAL FIELD

The present disclosure relates to a sheet recognition unit, a sheet handling device, a sheet recognition method, and a sheet recognition program.

BACKGROUND ART

Conventionally, a photoluminescent compound is known as a security element attached to a sheet such as a banknote. The photoluminescent compound is excited by ultraviolet light to generate fluorescence emission or phosphorescence emission. As a method for detecting these characteristics, for example, those described in the following literature are known.

JP 6469370 B describes a device that acquires IR information in addition to visible color information (RGB). During emission of visible light, light (infrared light or ultraviolet light) other than the visible light is simultaneously emitted. As a result, visible color information is acquired, and IR information is acquired as phosphorescence after all lights are turned off. In this way, the color information about the visible light and light other than the visible light is acquired with a small number of lighting times.

JP 7473677 B discloses an optical sensor that detects light from a sheet on which at least one type of monochromatic ink among n types of monochromatic ink is printed. The optical sensor includes a light source, a light receiving unit having first to (n-1)-th light receiving elements, a storage unit, and a correction processing unit. The storage unit stores a correction value based on reference data acquired by the light receiving unit independently receiving light emitted from the first to n-th monochromatic ink for each type of monochromatic ink. The correction processing unit executes correction processing on detection data acquired by the light receiving unit receiving light emitted from the sheet irradiated with light from the light source, using a correction value based on an inverse matrix of a matrix obtained by normalizing a predetermined matrix A with n rows and n columns acquired in advance.

SUMMARY

However, regarding a security element using a photoluminescent compound, a security element having higher security and capable of being mechanically recognized is demanded.

The present disclosure has been made in view of the above circumstances, and an object thereof is to provide a sheet recognition unit, a sheet handling device, a sheet recognition method, and a sheet recognition program capable of recognizing a sheet having high security using a photoluminescent compound.

In order to solve the above-described problems and achieve the object, (1) a sheet recognition unit according to a first aspect of the present disclosure includes a light source capable of emitting at least ultraviolet light to a sheet to be recognized, a light receiving unit that receives photoluminescence emitted from the sheet to be recognized, the sheet being irradiated with the ultraviolet light, and outputs a photoluminescence detection signal, and a recognition unit that recognizes the sheet to be recognized using the photoluminescence detection signal output from the light receiving unit, based on whether a visible photoluminescence emission amount and an infrared photoluminescence emission amount of the sheet to be recognized are within an allowable range with respect to reference data related to a visible photoluminescence emission amount and an infrared photoluminescence emission amount in a genuine sheet.

(2) In the sheet recognition unit described in (1), the reference data may include a ratio between the visible photoluminescence emission amount and the infrared photoluminescence emission amount, and the recognition unit may calculate a ratio between the visible photoluminescence emission amount and the infrared photoluminescence emission amount of the sheet to be recognized, and may recognize the sheet to be recognized, based on whether the ratio is within an allowable range with respect to the ratio included in the reference data.

(3) In the sheet recognition unit described in (1) or (2), the light receiving unit may receive photoluminescence of at least one color of blue, green, or red as the visible photoluminescence and may output a photoluminescence detection signal of the at least one color, the reference data may relate to the photoluminescence emission amount of the at least one color and the infrared photoluminescence emission amount, and the recognition unit may recognize the sheet to be recognized, based on whether the photoluminescence emission amount of the at least one color and the infrared photoluminescence emission amount of the sheet to be recognized are within an allowable range with respect to the reference data.

(4) In the sheet recognition unit described in (3), the light receiving unit may receive green photoluminescence as the visible photoluminescence and output a green photoluminescence detection signal, the reference data may relate to a green photoluminescence emission amount and the infrared photoluminescence emission amount, and the recognition unit may recognize the sheet to be recognized, based on whether the green photoluminescence emission amount and the infrared photoluminescence emission amount of the sheet to be recognized are within an allowable range with respect to the reference data.

(5) In the sheet recognition unit described in (3), the light receiving unit may receive red photoluminescence as the visible photoluminescence and output a red photoluminescence detection signal, the reference data may relate to a red photoluminescence emission amount and the infrared photoluminescence emission amount, and the recognition unit may recognize the sheet to be recognized, based on whether the red photoluminescence emission amount and the infrared photoluminescence emission amount of the sheet to be recognized are within an allowable range with respect to the reference data.

(6) In the sheet recognition unit described in (3), the light receiving unit may receive blue photoluminescence as the visible photoluminescence and output a photoluminescence detection signal, the reference data may relate to a blue photoluminescence emission amount and the infrared photoluminescence emission amount, and the recognition unit may recognize the sheet to be recognized, based on whether the blue photoluminescence emission amount and the infrared photoluminescence emission amount of the sheet to be recognized are within an allowable range with respect to the reference data.

(7) In the sheet recognition unit described in any one of (1) to (6), the light receiving unit may receive near-infrared photoluminescence as the infrared photoluminescence and output a near-infrared photoluminescence detection signal, the reference data may relate to the visible photoluminescence emission amount and a near-infrared photoluminescence emission amount, and the recognition unit may recognize the sheet to be recognized, based on whether the visible photoluminescence emission amount and the near-infrared photoluminescence emission amount of the sheet to be recognized are within an allowable range with respect to the reference data.

(8) In the sheet recognition unit described in any one of (1) to (7), the light receiving unit may include a first light receiving element having a color filter that transmits blue light and infrared light, a second light receiving element having a color filter that transmits green light and infrared light, and a third light receiving element having a color filter that transmits red light and infrared light.

(9) In the sheet recognition unit described in (8), the recognition unit may correct the photoluminescence detection signal obtained by the light receiving unit receiving the photoluminescence emitted from the sheet to be recognized irradiated with the ultraviolet light using a correction value based on a photoluminescence detection signal obtained by the light receiving unit alone receiving photoluminescence emitted from visible photoluminescent ink that emits visible photoluminescence of a specific color and photoluminescence emitted from infrared photoluminescent ink that emits infrared photoluminescence to calculate a visible photoluminescence emission amount of a specific color and the infrared photoluminescence emission amount of the sheet to be recognized, and may recognize the sheet to be recognized based on whether the visible photoluminescence emission amount of the specific color and the infrared photoluminescence emission amount are within the allowable range with respect to the reference data.

(10) In the sheet recognition unit described in (9), the correction value may be based on output values from two light receiving elements selected from the first light receiving element, the second light receiving element, or the third light receiving element.

(11) In the sheet recognition unit described in (10), one of the two light receiving elements may be, among the first light receiving element, the second light receiving element, and the third light receiving element, a light receiving element that outputs a maximum value when receiving the photoluminescence emitted from the visible photoluminescent ink, and the other one of the two light receiving elements may be, among the first light receiving element, the second light receiving element, and the third light receiving element, a light receiving element that outputs a maximum value when receiving the photoluminescence emitted from the infrared photoluminescent ink.

(12) In the sheet recognition unit described in (11), the correction value may be based on a matrix with two rows and two columns including output values obtained by the two light receiving elements respectively receiving the photoluminescence emitted from the visible photoluminescent ink and the photoluminescence emitted from the infrared photoluminescent ink.

(13) In the sheet recognition unit described in (12), the correction value may be based on a matrix obtained by normalizing the matrix.

(14) In the sheet recognition unit described in (12) or (13), the correction value may be based on an inverse matrix of the matrix.

(15) In the sheet recognition unit described in (9), in a case where a light receiving element that outputs a maximum value when receiving the photoluminescence emitted from the visible photoluminescent ink is identical to a light receiving element that outputs a maximum value when receiving the photoluminescence emitted from the infrared photoluminescent ink, the light receiving element is a light receiving element P, the first light receiving element, the second light receiving element, and the third light receiving element respectively output values a, b, and c when the light receiving unit receives the photoluminescence emitted from the visible photoluminescent ink, the first light receiving element, the second light receiving element, and the third light receiving element respectively output values d, e, and f when the light receiving unit receives the photoluminescence emitted from the infrared photoluminescent ink, and the correction value may be based on an output value from the light receiving element P and a combination of addition values indicating a largest difference among differences between the addition values of the output values a to f (d + e) - (a + b), (e + f) - (b + c), (d + f) - (a + c), and (d + e + f) - (a + b + c).

(16) In the sheet recognition unit described in (15), the correction value may be based on a matrix with two rows and two columns including an output value obtained by the light receiving element P alone receiving the photoluminescence emitted from the visible photoluminescent ink and the photoluminescence emitted from the infrared photoluminescent ink, and the combination of the addition values indicating the largest difference.

(17) In the sheet recognition unit described in (16), the correction value may be based on a matrix obtained by normalizing the matrix.

(18) In the sheet recognition unit described in (16) or (17), the correction value may be based on an inverse matrix of the matrix.

(19) In the sheet recognition unit described in any one of (1) to (7), the light receiving unit may include a first light receiving element having a color filter that transmits blue light, a second light receiving element having a color filter that transmits green light, a third light receiving element having a color filter that transmits red light, and a fourth light receiving element having a color filter that transmits infrared light.

(20) Further, a sheet handling device from a second aspect of the present disclosure includes the sheet recognition unit in any one of (1) to (19).

(21) Further, a sheet recognition method according to a third aspect of the present disclosure includes emitting at least ultraviolet light to a sheet to be recognized from a light source, receiving, with a light receiving unit, photoluminescence emitted from the sheet to be recognized, the sheet being irradiated with the ultraviolet light, and outputting a photoluminescence detection signal, and recognizing the sheet to be recognized by using the photoluminescence detection signal output from the light receiving unit, based on whether a visible photoluminescence emission amount and an infrared photoluminescence emission amount of the sheet to be recognized are within an allowable range with respect to reference data related to a visible photoluminescence emission amount and an infrared photoluminescence emission amount in a genuine sheet.

(22) Further, a sheet recognition program according to a fourth aspect of the present disclosure causing a sheet recognition unit to perform operations including emitting at least ultraviolet light to a sheet to be recognized from a light source, receiving, with a light receiving unit, photoluminescence emitted from the sheet to be recognized, the sheet being irradiated with the ultraviolet light, and outputting a photoluminescence detection signal, and recognizing the sheet to be recognized by using the photoluminescence detection signal output from the light receiving unit, based on whether a visible photoluminescence emission amount and an infrared photoluminescence emission amount of the sheet to be recognized are within an allowable range with respect to reference data related to a visible photoluminescence emission amount and an infrared photoluminescence emission amount in a genuine sheet.

The present disclosure can provide a sheet recognition unit, a sheet handling device, a sheet recognition method, and a sheet recognition program capable of recognizing a sheet having high security using a photoluminescent compound.

BRIEF DESCRIPTION OF DRAWINGS

FIG. 1 is a plan view schematically illustrating an example of a genuine banknote, and illustrating a state of visible light irradiation;

FIG. 2 is a plan view schematically illustrating an example of a genuine banknote, and illustrating a state of ultraviolet light irradiation;

FIG. 3 is a schematic diagram illustrating an example of a configuration of a sheet recognition unit according to a first embodiment, and is a diagram viewed from an oblique direction;

FIG. 4 is a flowchart describing an example of an operation of the sheet recognition unit according to the first embodiment;

FIG. 5 is a schematic perspective view illustrating an example of a configuration of a light receiving unit included in a sheet recognition unit according to a second embodiment;

FIG. 6 is a schematic diagram illustrating wavelength characteristics of color filters of the light receiving unit included in the sheet recognition unit according to the second embodiment;

FIG. 7 is a plan view schematically illustrating an example of a banknote to be recognized, the banknote being to be authenticated by fluorescence measurement;

FIG. 8 is a schematic perspective view describing an example of a configuration of a light receiving unit included in a sheet recognition unit according to a third embodiment;

FIG. 9 is a schematic diagram illustrating wavelength characteristics of color filters of the light receiving unit included in the sheet recognition unit according to the third embodiment;

FIG. 10 is a schematic perspective view illustrating an appearance of an example of a sheet handling device according to a fourth embodiment;

FIG. 11 is a schematic cross-sectional view describing an example of a configuration of an imaging unit included in the sheet recognition unit according to the fourth embodiment; and

FIG. 12 is a block diagram describing an example of a configuration of the sheet recognition unit according to the fourth embodiment.

DESCRIPTION OF EMBODIMENTS

Hereinafter, embodiments of a sheet recognition unit, a sheet handling device, a sheet recognition method, and a sheet recognition program of the present disclosure will be described in detail with reference to the drawings. Various sheets applicable as target sheets of the present disclosure include banknotes, checks, vouchers, bills, forms, securities, and card-like media, but hereinafter, the present disclosure will be described using devices for banknotes as an example.

Further, in this specification, photoluminescence is a concept including fluorescence and phosphorescence, but hereinafter, the present disclosure will be described using fluorescence (photoluminescence that can be detected during irradiation with excitation light) as an example of photoluminescence. That is, in the following description, "photoluminescence", "photoluminescence detection signal", "photoluminescence emission amount", "photoluminescent ink", "visible photoluminescent ink", and "infrared photoluminescent ink" are respectively "fluorescence", "fluorescence detection signal", "fluorescence emission amount", "fluorescent ink", "visible fluorescent ink", and "infrared fluorescent ink".

Note that the sheet recognition program may be introduced in advance into the sheet recognition unit and the sheet handling device, or may be provided to an operator with the program being recorded in a computer-readable recording medium or provided via a network.

As described above, the sheet recognition unit and the sheet handling device of the present disclosure may include a storage unit including a storage device such as a semiconductor memory (random-access memory [RAM] or read-only memory [ROM]) and a hard disk.

In the following description, the same reference signs are appropriately used for the same portions or portions having similar functions between different drawings, and repeated description thereof is appropriately omitted. Further, in the drawings illustrating a structure, XYZ coordinate systems orthogonal to each other are appropriately illustrated.

(First Embodiment)

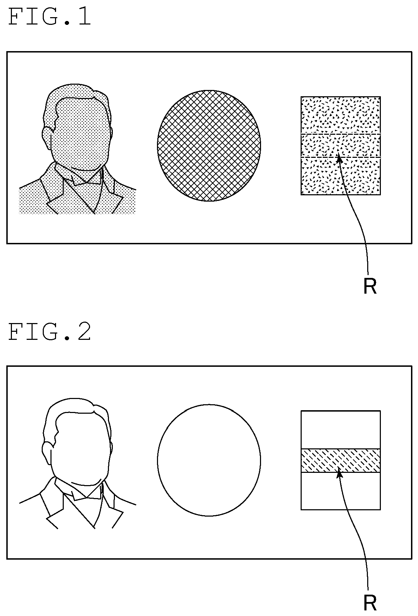

First, a genuine banknote to be compared with a banknote to be recognized will be described. As illustrated in FIGs. 1 and 2, fluorescent ink to be an authentication target is printed in a predetermined region R on the genuine banknote.

The fluorescent ink contains at least one type of photoluminescent compound, for example, two or more photoluminescent compounds. During emission of ultraviolet light as excitation light, fluorescence is emitted at a predetermined wavelength band including at least a visible range and an infrared range. The fluorescence spectrum of the fluorescent ink may have peaks in the visible range and the infrared range, respectively. Hereinafter, the fluorescent ink may be referred to as a special fluorescent ink.

On the other hand, the special fluorescent ink hardly emits light even when the visible light is emitted, and transmits visible light. Therefore, the special fluorescent ink is not visually recognized by human eyes in a situation where visible light is emitted, for example, under natural light or under general artificial illumination (see FIG. 1). When the special fluorescent ink is irradiated with ultraviolet light, a fluorescent component that emits light in the visible range can be visually recognized by human eyes (see FIG. 2). However, even in this case, a fluorescent component that emits light in the infrared range cannot be visually recognized by human eyes. Therefore, the special fluorescent ink can function as a highly secure security element.

For example, ink containing a mixture of a photoluminescent compound that emits fluorescence in the visible range and a photoluminescent compound that emits fluorescence in the infrared range may be printed on a printing portion of the special fluorescent ink. Alternatively, ink containing the photoluminescent compound that emits fluorescence in the visible range and ink containing the photoluminescent compound that emits fluorescence in the infrared range may be applied to be superimposed on the printing portion.

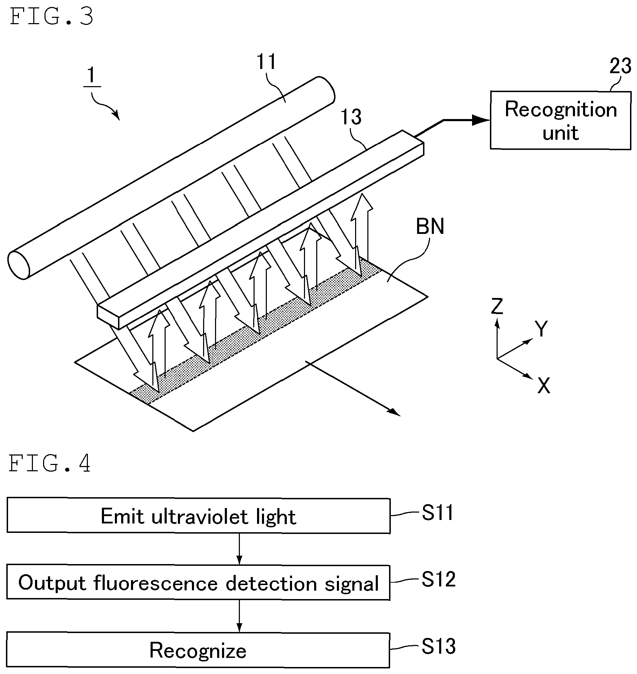

A configuration of the sheet recognition unit according to the present embodiment will be described below with reference to FIG. **3**.

As illustrated in FIG. 3, the sheet recognition unit 1 according to the present embodiment detects fluorescence emitted from a banknote BN to be recognized. The sheet recognition unit 1 includes a light source 11, a light receiving unit 13, and a recognition unit 23. The light source 11 is capable of emitting at least ultraviolet light to the banknote BN to be recognized. The light receiving unit 13 receives the fluorescence emitted from the banknote BN to be recognized, the banknote being irradiated with the ultraviolet light, and outputs a fluorescence detection signal. The recognition unit 23 recognizes the banknote BN to be recognized using the fluorescence detection signal output from the light receiving unit 13.

Here, the banknote BN to be recognized may be transported in an X direction in an XY plane. A Y direction may correspond to a main scanning direction of the light receiving unit 13, and the X direction may correspond to a sub-scanning direction of the light receiving unit 13.

The recognition unit 23 recognizes the banknote BN to be recognized, based on whether a visible fluorescence emission amount and an infrared fluorescence emission amount of the banknote BN to be recognized are within an allowable range with respect to the reference data related to a visible fluorescence emission amount and an infrared fluorescence emission amount in a genuine banknote. Therefore, an authentication can be made for special fluorescent ink that emits fluorescence in a predetermined wavelength band including at least the visible region and the infrared region. That is, the sheet recognition unit 1 makes it possible to mechanically recognize a banknote having a high security property using a photoluminescent compound. As described above, the recognition unit 23 may authenticate the banknote BN to be recognized.

The "fluorescence emission amount" is a value indicating the intensity (brightness) of fluorescence.

The light source 11 irradiates the banknote BN with ultraviolet light as excitation light. The light source 11 may be disposed on the same side as the light receiving unit 13 with respect to the banknote BN.

The light source 11 may be longer than the length of the banknote BN in the Y direction, or may irradiate the banknote BN entirely in the Y direction with light linearly extending along the Y direction. In this case, the light source 11 may include a linear rod-shaped transparent material, and light emitting elements (usually, a plurality of light emitting diodes (LEDs), for example) facing at least one of both end surfaces of the transparent material. The light source 11 may irradiate the banknote BN with light via the transparent material.

The light receiving unit 13 is configured to be able to receive fluorescence emitted from the special fluorescent ink of the banknote BN to be recognized while the banknote BN being irradiated with ultraviolet light. That is, the light receiving unit 13 is configured to be able to detect a fluorescent component in the visible range, the component being emitted from the special fluorescent ink, and a fluorescent component in the infrared range, the component being emitted from the special fluorescent ink. At this time, the light receiving unit 13 can function as a sensor having sensitivity at least in the wavelength band (the visible range and infrared range) of the fluorescence emitted from the special fluorescent ink. The light receiving unit 13 then outputs an electric signal (which may be a digital signal) corresponding to the amount of incident light (light receiving amount). That is, the fluorescence detection signal is an electric signal corresponding to the incident light amount of the fluorescence emitted from the banknote BN during a turn-on period of the ultraviolet light.

The light receiving unit 13 may include one or more light receiving elements, and the light receiving elements may receive light, convert the light into an electric signal depending on the amount of incident light, and output the electric signal.

The light receiving unit 13 may be longer than the length of the banknote BN in the Y direction, and may receive light transmitted through, reflected from, or emitted from the banknote BN entirely in the Y direction.

The light receiving unit 13 may output an electric signal depending on the amount of incident light as image data. At this time, the light receiving unit 13 may include a plurality of pixels arranged in a row in the Y direction (main scanning direction). That is, the light receiving unit 13 may output an electric signal depending on the amount of incident light at a plurality of channels corresponding to the plurality of pixels (positions in the Y direction (main scanning direction)). Note that the channels (columns) are numbers sequentially allocated to the light receiving elements (imaging elements) in the Y direction. At this time, the light receiving unit 13 may output, as image data, line data that is data related to the light simultaneously received at each channel. The image data of the entire banknote BN may be output by repeating irradiation with light from the light source 11 and reception of light by the light receiving unit 13 while transporting the banknote BN in the X direction (sub-scanning direction).

As described above, the light source 11 and the light receiving unit 13 may acquire the image of the entire banknote BN by continuously and repeatedly executing imaging of a predetermined cycle as one period.

In this specification, one cycle refers to a control pattern in which the timing of turning on and off the light emitting elements in each wavelength band, signal reading, and the like are set. The fluorescence detection signal may be acquired from an entire sheet by continuously and repeatedly executing the control pattern of one cycle as one period. One cycle may indicate a periodic control pattern related to turning-on, turning-off, and light receiving, the control pattern being set to acquire a reflective image and/or transmissive image of the sheet.

The reflective image is an image based on light emitted from a light source disposed on the same side as the light receiving unit with respect to the sheet and reflected from the sheet. The transmissive image is an image based on light emitted from a light source disposed on an opposite side from the light receiving unit with respect to the sheet and transmitted through the sheet. Therefore, the reflective image and the transmissive image are distinguished from a fluorescent image based on fluorescence emitted from a sheet.

The image data that can be acquired by the light receiving unit 13 includes a plurality of pixels arranged in a matrix pattern in the Y direction (main scanning direction) and the X direction (sub-scanning direction). An address of each pixel is specified by a channel (column) of the light receiving unit 13 corresponding to the position in the Y direction and a line (row) corresponding to the position in the X direction. The line (row) is a number sequentially allocated to the line data sequentially output from the light receiving unit 13.

The light receiving unit 13 may receive light in a plurality of wavelength bands coming from the banknote BN and output an electric signal (fluorescence detection signal) for each of the plurality of wavelength bands. In this case, each pixel may include a plurality of light receiving elements that selectively receive light in different wavelength bands.

The light receiving unit 13 may collectively receive the fluorescent component in the visible range and the fluorescent component in the infrared range emitted from the banknote BN irradiated with the ultraviolet light without separating them, and output a fluorescence detection signal including a signal value that depends on the light amount of the sum of both the components. In this case, a spectral overlap correction may be made on the signal value that depends on the light amount of the sum of both the components. As result, the light emission amount may be separated into a light emission amount that depends on the fluorescence component in the visible range and a light emission amount that depends on the fluorescent component in the infrared range. The separated light emission amounts may be used as the visible fluorescence emission amount and the infrared fluorescence emission amount of the banknote BN to be recognized.

On the other hand, the light receiving unit 13 may separate the fluorescent component in the visible range and the fluorescent component in the infrared range emitted from the banknote BN irradiated with the ultraviolet light from each other, receive the separated components independently, and output signal values that respectively depend on the light amounts of the respective components. In this case, the signal values can be used as the visible fluorescence emission amount and the infrared fluorescence emission amount of the banknote BN to be recognized, respectively, without making the spectral overlap correction.

The case where the spectral overlap correction is made and the case where the spectral overlap correction is not made will be described in more detail in second and third embodiments, respectively.

As described above, the visible fluorescence emission amount and the infrared fluorescence emission amount of the banknote BN to be recognized may be obtained by making the spectral overlap correction on the fluorescence detection signal output from the light receiving unit 13, or may be obtained without making the spectral overlap correction on the fluorescence detection signal output from the light receiving unit 13.

The spectral overlap correction is to correct the fluorescence detection signal obtained by receiving the fluorescence emitted from a banknote using a correction value based on the fluorescence detection signal. The fluorescence detection signal is obtained by the light receiving unit receiving the fluorescence emitted from the visible fluorescent ink that emits fluorescence of a specific visible color and the fluorescence emitted from the infrared fluorescent ink that emits infrared fluorescence individually. In this way, the fluorescence emission amount in the wavelength band of the specific visible color and the fluorescence emission amount in the infrared region in the banknote are calculated.

The "reference data" referred to by the recognition unit 23 is information for defining a standard (for example, a threshold) regarding the (genuine) visible fluorescence emission amount and the (genuine) infrared fluorescence emission amount acceptable as a genuine banknote. The information may include, for example, an upper limit value and a lower limit value of each of the visible fluorescence emission amount and the infrared fluorescence emission amount. When a determination is made whether a certain fluorescence emission amount is within the allowable range with respect to the reference data, the determination may be made whether the fluorescence emission amount is between the upper limit value and the lower limit value of the fluorescence emission amount defined by the reference data.

The reference data may include a ratio between the visible fluorescence emission amount and the infrared fluorescence emission amount of the genuine banknote **BN.** In this case, the recognition unit 23 may calculate the ratio between the visible fluorescence emission amount and the infrared fluorescence emission amount of the banknote to be recognized, and recognize the sheet to be recognized, based on whether the ratio is within an allowable range with respect to the ratio included in the reference data. Thus, the authentication of special fluorescent ink can be performed with higher accuracy.

Hereinafter, the ratio between the visible fluorescence emission amount and the infrared fluorescence emission amount may be simply referred to as a fluorescence emission ratio. Note that the fluorescence emission ratio may be obtained by dividing the visible fluorescence emission amount by the infrared fluorescence emission amount or by dividing the infrared fluorescence emission amount by the visible fluorescence emission amount. Alternatively, the fluorescence emission ratio may be a percentage thereof.

In the case of using the fluorescence emission ratio, the reference data may include an upper limit value and a lower limit value of the (genuine) fluorescence emission ratio acceptable as a genuine banknote. The recognition unit 23 may determine whether the fluorescence emission ratio of the banknote to be recognized is between the upper limit value and the lower limit value of the fluorescence emission ratio defined by the reference data.

As for the special fluorescent ink, the fluorescence spectrum may have a peak in at least one of a blue wavelength band, a green wavelength band, or a red wavelength band. In the visible range, the fluorescence spectrum may have a peak only in one of the blue wavelength band, the green wavelength band, or the red wavelength band.

The light receiving unit 13 may receive at least one of blue, green, or red fluorescence as the visible fluorescence and output a fluorescence detection signal of the at least one color. The reference data may relate to a fluorescence emission amount of the at least one color and an infrared fluorescence emission amount. The recognition unit 23 may recognize the banknote to be recognized based on whether the fluorescence emission amount of the at least one color and the infrared fluorescence emission amount of the banknote to be recognized are within the allowable range with respect to the reference data. This makes it possible to authenticate the special fluorescent ink having a peak in at least one of the blue wavelength band, the green wavelength band, or the red wavelength band in the fluorescence spectrum.

More specifically, the light receiving unit 13 may receive the green fluorescence as the visible fluorescence and output a green fluorescence detection signal. The reference data may relate to a green fluorescence emission amount and an infrared fluorescence emission amount. The recognition unit 23 may recognize the banknote to be recognized based on whether the green fluorescence emission amount and the infrared fluorescence emission amount of the banknote to be recognized are within the allowable range with respect to the reference data.

The light receiving unit 13 may receive red fluorescence as the visible fluorescence and output a red fluorescence detection signal. The reference data may relate to a red fluorescence emission amount and an infrared fluorescence emission amount. The recognition unit 23 may recognize the banknote to be recognized based on whether the red fluorescence emission amount and the infrared fluorescence emission amount of the banknote to be recognized are within the allowable range with respect to the reference data.

Further, the light receiving unit 13 may receive blue fluorescence as the visible fluorescence and output a blue fluorescence detection signal. The reference data may relate to a blue fluorescence emission amount and an infrared fluorescence emission amount. The recognition unit 23 may recognize the banknote to be recognized based on whether the blue fluorescence emission amount and the infrared fluorescence emission amount of the banknote to be recognized are within the allowable range with respect to the reference data.

As for the special fluorescent ink, the fluorescence spectrum may have a peak in the infrared region, or may have a peak in the near infrared range.

The light receiving unit 13 may receive near-infrared fluorescence as the infrared fluorescence and output a near-infrared fluorescence detection signal. The reference data may relate to a visible fluorescence emission amount and a near-infrared fluorescence emission amount. The recognition unit 23 may recognize the banknote to be recognized based on whether the visible fluorescence emission amount and the near-infrared fluorescence emission amount of the banknote to be recognized are within the allowable range with respect to the reference data. This makes it possible to authenticate the special fluorescent ink having a peak in the near-infrared wavelength band in the fluorescence spectrum.

In this specification, blue means light (color) having a wavelength of approximately 400 nm to 500 nm, and may be light (color) having a peak wavelength in this wavelength band. Green means light (color) having a wavelength of approximately 500 nm to 600 nm, and may be light (color) having a peak wavelength in this wavelength band. Red means light (color) having a wavelength of approximately 600 nm to 750 nm, and may be light (color) having a peak wavelength in this wavelength band. The infrared light means light having a wavelength of approximately 750 nm or more, and may be light (color) having a peak wavelength in this wavelength band. The near-infrared light means light having a wavelength of approximately 750 nm to 1500 nm, and may be light (color) having a peak wavelength in this wavelength band.

An operation of the sheet recognition unit 1 according to the present embodiment will be described below with reference to FIG. **4.**

As illustrated in FIG. **4,** first, the light source 11 irradiates the banknote BN to be recognized with at least ultraviolet light (step S11).

The light receiving unit 13 receives fluorescence emitted from the banknote BN to be recognized irradiated with the ultraviolet light and outputs a fluorescence detection signal (step S12).

Thereafter, the recognition unit 23 recognizes the banknote BN to be recognized (step S13) using the fluorescence detection signal output from the light receiving unit 13, based on whether the visible fluorescence emission amount and the infrared fluorescence emission amount of the banknote BN to be recognized are within the allowable range with respect to the reference data related to a visible fluorescence emission amount and an infrared fluorescence emission amount in a genuine banknote. The operation of the sheet recognition unit 1 is then ended.

Note that the recognition unit 23 may be operated by a control unit, described later, executing an appropriate program.

(Second Embodiment)

The case where a spectral overlap correction is made will be described in more detail in the present embodiment.

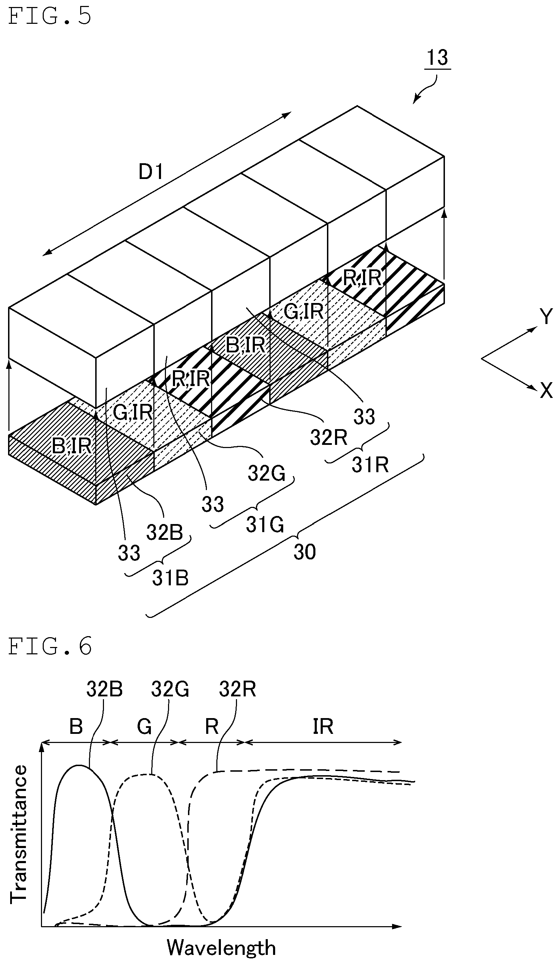

As illustrated in FIG. 5, in the present embodiment, a light receiving unit 13 includes a first light receiving element 31B having a color filter 32B, a second light receiving element 31G having a color filter 32G, and a third light receiving element 31R having a color filter 32R.

The light receiving unit 13 may include a plurality of pixels 30 arranged in a line in a main scanning direction D1(direction orthogonal to a transport direction of a banknote BN, i.e. a Y direction). Each pixel 30 may include one first light receiving element (imaging element) 31B, one second light receiving element (imaging element) 31G, and one third light receiving element (imaging element) 31R. The first light receiving element 31B, the second light receiving element 31G, and the third light receiving element 31R may be arranged in a line in this order in the main scanning direction D1.

Here, the light receiving element (imaging element) means an element that detects the intensity of light in a predetermined wavelength band (converts into an electric signal). The light receiving element may include a photodetector such as a photodiode, and a color filter (color resist) that is disposed on a light receiving surface of the photodetector and reduces transmission of light in wavelength bands (for example, green and red wavelength bands) excluding predetermined wavelength bands (for example, blue and infrared wavelength bands) to be detected.

As illustrated in FIG. 5, the first light receiving element 31B may include a photodetector 33 and the color filter 32B, the second light receiving element 31G may include the photodetector 33 and the color filter 32G, and the third light receiving element 31R may include the photodetector 33 and the color filter 32R.

As illustrated in FIG. 6, the color filter 32B transmits blue light and infrared light, the color filter 32G transmits green light and infrared light, and the color filter 32R transmits red light and infrared light. Therefore, the first light receiving element 31B, the second light receiving element 31G, and the third light receiving element 31R receive infrared light together with the corresponding visible light. The color filter 32B absorbs green light and red light, the color filter 32G absorbs blue light and red light, and the color filter 32R absorbs blue light and green light.

The light receiving unit 13 collectively receives a fluorescent component in a visible range and a fluorescent component in an infrared range emitted from a banknote (special fluorescent ink) without separating them, using each light receiving element, and outputs a fluorescence detection signal including a signal value that depends on the light amount of the sum of both the components. Therefore, the spectral overlap correction is required.

That is, the recognition unit 23 corrects the fluorescence detection signal obtained by the light receiving unit 13 receiving the fluorescence emitted from the banknote that is to be recognized and has been irradiated with ultraviolet light, using the correction value to calculate the visible fluorescence emission amount of a specific color and the infrared fluorescence emission amount of the banknote to be recognized. The recognition unit 23 then recognizes the banknote to be recognized based on whether the calculated visible fluorescence emission amount of the specific color and the infrared fluorescence emission amount are within an allowable range with respect to the reference data.

The correction value is based on the fluorescence detection signal obtained by the light receiving unit 13 individually receiving fluorescence emitted from visible fluorescent ink that emits fluorescence of a specific visible color and fluorescence emitted from infrared fluorescent ink that emits infrared fluorescence.

As for the visible fluorescent ink that emits fluorescence in a specific visible color, the fluorescence spectrum may have a peak only in any one of the blue wavelength band, the green wavelength band, or the red wavelength band. Hereinafter, this ink may be simply referred to as a visible fluorescent ink of a specific color. Thus, the visible fluorescent ink of a specific color may emit only blue fluorescence, green fluorescence, or red fluorescence. Further, the visible fluorescent ink of a specific color may emit no fluorescence in a wavelength band excluding the visible range, for example, in the infrared range.

As for the infrared fluorescent ink that emits infrared fluorescent light, the fluorescence spectrum may have a peak only in the infrared region (near-infrared region). Hereinafter, this ink may be simply referred to as infrared fluorescent ink. The infrared fluorescent ink may emit no fluorescence in a wavelength band excluding the infrared range (near-infrared range), for example, in the visible range.

The peak in the visible range of the fluorescence spectrum of the visible fluorescent ink of a specific color exists in the band of the wavelength of the same color as the peak in the visible range of the fluorescence spectrum of the special fluorescent ink to be printed on a genuine banknote. The peaks exist, for example, in the blue, green, or red wavelength band. The peak in the infrared range of the fluorescence spectrum of the infrared fluorescent ink exists in the band of the wavelength identical to the peak in the infrared range of the fluorescence spectrum of the special fluorescent ink to be printed on a genuine banknote. The peaks exist, for example, in the near-infrared wavelength band.

Examples of a specific method for calculating the correction value include (A) a method for making calculation based on output values from only two light receiving elements, and (B) a method for making calculation based on an output value from one light receiving element and a value obtained by adding output values from at least two light receiving elements.

That is, (A) the correction value may be based on output values from two light receiving elements selected from the first light receiving element 31B, the second light receiving element 31G, or the third light receiving element 31R. As a result, since the spectral overlap correction can be made using the output values from these two light receiving elements, the calculation regarding the correction can be easily made.

In this case, one of the two light receiving elements may be, among the first light receiving element 31B, the second light receiving element 31G, and the third light receiving element 31R, a light receiving element that outputs a maximum value when receiving fluorescence emitted from the visible fluorescent ink of a specific color. The other one of the two light receiving elements may be, among the first light receiving element 31B, the second light receiving element 31G, and the third light receiving element 31R, a light receiving element that outputs a maximum value when receiving fluorescence emitted from the infrared fluorescent ink. As a result, the accuracy of the spectral overlap correction can be improved. That is, the light emission amount that depends on the fluorescent component in the visible range and the light emission amount that depends on the fluorescent component in the infrared range can be separated more accurately from the fluorescence detection signal obtained by receiving the fluorescence emitted from the special fluorescent ink.

The correction value may be based on a matrix with two rows and two columns including output values obtained by the two light receiving elements alone receiving the fluorescence emitted from the visible fluorescent ink of a specific color and the fluorescence emitted from the infrared fluorescent ink.

The correction value may be based on a matrix obtained by normalizing the above-described matrix. In the matrix obtained by normalizing the above-described matrix, a diagonal component is 1.

The correction value may be based on an inverse matrix of the above-described matrix (it may be normalized or not normalized).

Specifically, before shipment of the sheet recognition unit 1 or at the time of maintenance, the fluorescence emitted from the visible fluorescent ink of a specific color and the fluorescence emitted from the infrared fluorescent ink are independently received by the light receiving unit 13, and the light emission amounts (output values) as references of the fluorescent ink are measured. As a result, for example, output values indicated in the following Table 1 are obtained. Here, for example, green visible fluorescent ink is assumed to be used as the visible fluorescent ink of a specific color.

[Table 1]

|  | Green fluorescent ink | Infrared fluorescent ink |
|---|---|---|
| CH_B | a | d |
| CH_G | b | e |
| CH_R | c | f |

A symbol CH_B represents an output value from the first light receiving element 31B, CH_G represents an output value from the second light receiving element 31G, and CH_R represents an output value from the third light receiving element 31R. As for the measurement result of the green visible fluorescent ink, b indicates a maximum value. As for the measurement result of the infrared fluorescent ink, f indicates a maximum value. That is, the measurement result of the green visible fluorescent ink is greater than the measurement result of the infrared fluorescent ink in the light receiving element (second light receiving element 31G), and the measurement result of the infrared fluorescent ink is greater than the measurement result of the green visible fluorescent ink in the light receiving element (third light receiving element 31R). Therefore, these light receiving elements are used. As a result, the following Formula (1) holds.

[Formula 1]

$$\begin{pmatrix} CH\_G \\ CH\_R \end{pmatrix} = A \begin{pmatrix} Green\_INK \\ IR\_INK \end{pmatrix} \quad (1)$$

where

$$A = \begin{pmatrix} b & e \\ c & f \end{pmatrix}$$

A symbol Green_INK represents a light emission amount (fluorescence signal amount) of the green visible fluorescent ink after correction, and IR_INK represents a light emission amount (fluorescence signal amount) of the infrared fluorescent ink after correction.

When the matrix A in the above Formula (1) is normalized, the relationship of the following Formula (2) holds.

[Formula 2]

$$\begin{pmatrix} CH\_G \\ CH\_R \end{pmatrix} = B \begin{pmatrix} Green\_INK \\ IR\_INK \end{pmatrix} \quad (2)$$

where

$$B = \begin{pmatrix} 1 & e/f \\ c/b & 1 \end{pmatrix}$$

When the Formula (2) is transformed, the relationship of the following Formula (3) holds.

[Formula 3]

$$\begin{pmatrix} Green\_INK \\ IR\_INK \end{pmatrix} = B^{-1} \begin{pmatrix} CH\_G \\ CH\_R \end{pmatrix} \quad (3)$$

where

$$B^{-1} = \begin{pmatrix} 1 & e/f \\ c/b & 1 \end{pmatrix}^{-1}$$

The symbol Green_INK, that is, the light emission amount of the green visible fluorescent ink after correction and IR_INK, that is, the light emission amount of the infrared fluorescent ink after correction can be calculated (separated) by executing arithmetic processing for multiplying the fluorescence detection signal obtained by the light receiving unit 13 receiving light by an inverse matrix $B^{-1}$ as shown in the above Formula (3).

The inverse matrix $B^{-1}$ may be stored in the storage unit as a correction value.

When the blue or red visible fluorescent ink is used as the visible fluorescent ink of a specific color, the light emission amount of the blue or red visible fluorescent ink (Blue _INK or Red_INK) after correction and the light emission amount of the infrared fluorescent ink (IR_INK) after correction can be similarly separated.

The method of (B) will be described below. This method can be used when the method (A) is not available.

That is, in a case where the light receiving element that outputs the maximum value when receiving the fluorescence emitted from the visible fluorescent ink of a specific color is identical to the light receiving element that outputs the maximum value when receiving the fluorescence emitted from the infrared fluorescent ink, this light receiving element is a light receiving element P. Output values that are output from the first light receiving element 31B, the second light receiving element 31G, and the third light receiving element 31R when the light receiving unit 13 receives the fluorescence emitted from the visible fluorescent ink of a specific color are respectively denoted by a, b, and c. Output values that are output from the first light receiving element 31B, the second light receiving element 31G, and the third light receiving element 31R when the light receiving unit 13 receives the fluorescence emitted from the infrared fluorescent ink are respectively denoted by d, e, and f. In this case, the correction value may be based on the output value from the light receiving element P and a combination of addition values indicating the largest difference among (d + e) - (a + b), (e + f) - (b + c), (d + f) - (a + c), and (d + e + f) - (a + b + c) which are the differences between the addition values of the output values a to f. As a result, even in a case where the method (A) is not available, the spectral overlap correction can be made.

The correction value may be based on a matrix with two rows and two columns including output values obtained by the light receiving element P independently receiving the fluorescence emitted from the visible fluorescent ink of a specific color and the fluorescence emitted from the infrared fluorescent ink, and a combination of the addition values indicating the largest difference.

The correction value may be based on a matrix obtained by normalizing the above-described matrix. In the matrix obtained by normalizing the above-described matrix, a diagonal component is 1.

The correction value may be based on an inverse matrix of the above-described matrix (it may be normalized or not normalized).

Specifically, the output values shown in the following Table 2 are obtained.

[Table 2]

|  | Red fluorescent ink | Infrared fluorescent ink | Difference |
|---|---|---|---|
| CH_B | a | d | - |
| CH_G | b | e | - |
| CH_R | c | f | - |
| B + G | a + b | d + e | (d + e) - (a + b) |

(continued)

|  | Red fluorescent ink | Infrared fluorescent ink | Difference |
|---|---|---|---|
| G + R | b + c | e + f | (e + f) - (b + c) |
| B + R | a + c | d + f | (d + f) - (a + c) |
| B + G + R | a + b + c | d + e + f | (d + e + f) - (a + b + c) |

Here, the red visible fluorescent ink is assumed to be used as the visible fluorescent ink of a specific color. Further, a symbol c indicates the maximum value in the measurement result of the visible fluorescent ink of the specific color, f indicates the maximum value in the measurement result of the infrared fluorescent ink, and the output value from the third light receiving element 31R is the maximum value in any case. That is, the third light receiving element 31R is the light receiving element P.

In this case, as shown in Table 2, the output values from the plurality of light receiving elements are added (B + R, G + R, B + R, B + G + R), and the difference between the output value of the red visible fluorescent ink and the output value of the infrared fluorescent ink at each added value is calculated (rightmost column in Table 2). The correction value is then calculated using the combination (for example, the first light receiving element 31B and the second light receiving element 31G) of the light receiving elements having the largest difference, and the output values from the light receiving element P (that is, the third light receiving element 31R) having the maximum value.

As a result, the following Formula (4) holds.

[Formula 4]

$$\begin{pmatrix} CH\_R \\ B + G \end{pmatrix} = C \begin{pmatrix} R\_INK \\ IR\_INK \end{pmatrix} \quad (4)$$

where

$$C = \begin{pmatrix} c & f \\ a + b & d + e \end{pmatrix}$$

The symbol Red_INK represents a light emission amount (fluorescence signal amount) of the red visible fluorescent ink after correction, and IR_INK represents a light emission amount (fluorescence signal amount) of the infrared fluorescent ink after correction.

When a matrix C in the above Formula (4) is normalized, the relationship of the following Formula (5) holds.

[Formula 5]

$$\begin{pmatrix} CH\_R \\ B + G \end{pmatrix} = D \begin{pmatrix} R\_INK \\ IR\_INK \end{pmatrix} \quad (5)$$

where

$$D = \begin{pmatrix} 1 & f/(d + e) \\ (a + b)/c & 1 \end{pmatrix}$$

When the Formula (5) is transformed, the relationship of the following Formula (6) holds.

[Formula 6]

$$\begin{pmatrix} R\_INK \\ IR\_INK \end{pmatrix} = D^{-1} \begin{pmatrix} CH\_R \\ B + G \end{pmatrix} \quad (6)$$

where

$$D^{-1} = \begin{pmatrix} 1 & f/(d+e) \\ (a+b)/c & 1 \end{pmatrix}^{-1}$$

The symbol Red_INK, that is, the light emission amount of the red visible fluorescent ink after correction and IR_INK, that is, the light emission amount of the infrared fluorescent ink after correction can be calculated (separated) by executing arithmetic processing for multiplying the fluorescence detection signal obtained by the light receiving unit 13 receiving light by an inverse matrix $D^{-1}$ as shown in the above Formula (6).

The inverse matrix $D^{-1}$ may be stored in the storage unit as the correction value.

When the blue or green visible fluorescent ink is used as the visible fluorescent ink of a specific color, the light emission amount of the blue or green visible fluorescent ink (Blue_INK or Green_INK) after correction and the light emission amount of the infrared fluorescent ink (IR_INK) after correction can be similarly separated.

These correction values can also be used to set reference data. Further, in either case of using the above methods (A) or (B), the authentication of the special fluorescent ink may be made by using the fluorescence emission ratio as described in the first embodiment.

For example, the fluorescence detection signal obtained by the light receiving unit 13 receiving the fluorescence emitted from a genuine banknote irradiated with the ultraviolet light is corrected using any one of the above correction values. As a result, the visible fluorescence emission amount (for example, Green_INK or Red_INK described above) of the specific color and the infrared fluorescence emission amount (for example, IR_INK described above) of the genuine banknote may be calculated. A fluorescence emission ratio $\alpha$ may be then calculated by the following Formula (7) and used as the reference data.

[Formula 7]

$$\alpha = \frac{Green\_INK (or\ R\_INK)}{IR\_INK} \quad (7)$$

An example of authentication using the correction value (particularly, the above Formula (3)) and the fluorescence emission ratio $\alpha$ will be described below.

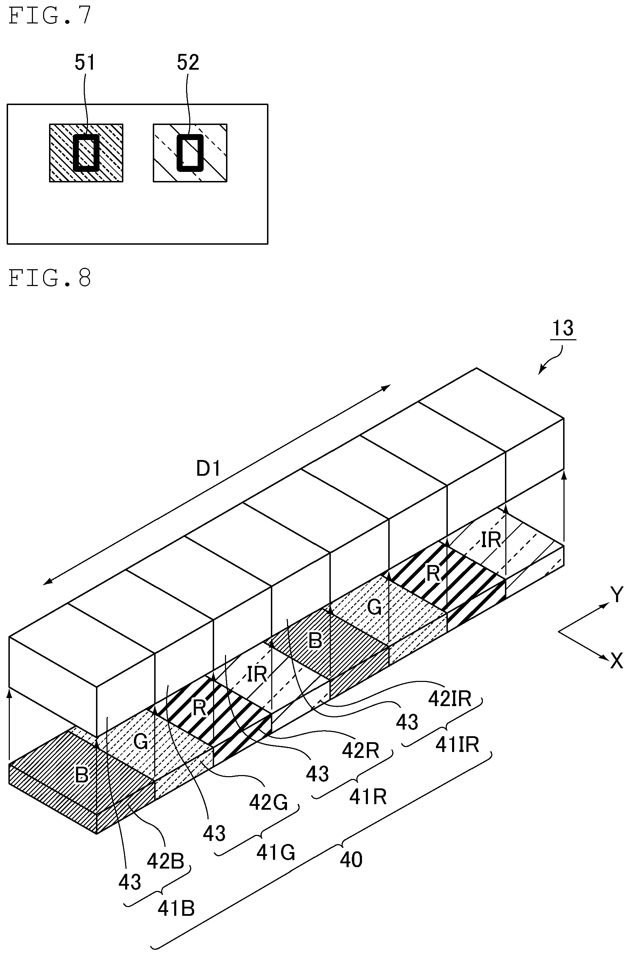

As illustrated in FIG. 7, two portions (regions surrounded respectively by a frame 51 and a frame 52) are desired to be subject to authentication using fluorescence measurement. Green visible fluorescent ink is printed on the frame 51, and special fluorescent ink that emits fluorescence in the green wavelength band and the infrared range is printed on the frame 52. When these portions are irradiated with ultraviolet light, fluorescence is received by the light receiving unit 13, and a light emission amount (output value) is measured, for example, output values shown in Table 3 below are obtained.

[Table 3]

|       | Frame 51 | Frame 52 |
|-------|----------|----------|
| CH_B  | g        | j        |
| CH_G  | h        | k        |
| CH_R  | i        | i        |

The symbol CH_B represents an output value from the first light receiving element 31B, CH_G represents an output value from the second light receiving element 31G, and CH_R represents an output value from the third light receiving element 31R.

Based on this measurement results and the Formula (3), when Green_INK, that is, the light emission amount of the green visible fluorescent ink after the correction, and IR_INK, that is, the light emission amount of the infrared fluorescent ink after the correction are calculated for each of the frame 51 and the frame 52, for example, results shown in the following Table 4 are obtained. When the fluorescence emission ratio $\alpha$ is calculated for each of the frame 51 and the frame 52 in accordance with the Formula (7), for example, results shown in Table 4 below are obtained.

[Table 4]

|           | Frame 51 | Frame 52 |
|-----------|----------|----------|
| Green _INK | 200      | 160      |
| IR_INK    | 1        | 100      |

(continued)

|  | Frame 51 | Frame 52 |
|---|---|---|
| $\alpha$ | 200 | 1.6 |

Here, for example, the fluorescence emission ratio $\alpha$ as the reference data calculated in advance from the genuine banknote is 1.6, and the fluctuation allowable range due to a variation (transport, deterioration, or arithmetic error) is set to 50%, and $\alpha$ = 0.8 to 2.4 is set as genuine (allowable range). In this case, as shown in the following Table 5, the authentication can be made that the frame 52 portion is "Genuine" and the frame 51 portion is "Counterfeit".

[Table 5]

|  | Frame 51 | Frame 52 |
|---|---|---|
| Authentication | Counterfeit | Genuine |

Note that normalization is performed in accordance with a correction formula here, but normalization may not be performed in any of the method (A) or (B). In this case, since a relative fluorescence emission amount with respect to the reference visible fluorescent ink of a specific color and the reference infrared fluorescent ink can be obtained, deterioration caused by banknote circulation or the like can be easily detected.

(Third Embodiment)

The case where a spectral overlap correction is not made will be described in the present embodiment.

As illustrated in FIG. 8, in the present embodiment, a light receiving unit 13 includes a first light receiving element 41B having a color filter 42B, a second light receiving element 41G having a color filter 42G, a third light receiving element 41R having a color filter 42R, and a fourth light receiving element 41IR having a color filter 42IR.

The light receiving unit 13 may include a plurality of pixels 40 arranged in a line in a main scanning direction D1 (direction orthogonal to a transport direction of a banknote BN, i.e. a Y direction). Each pixel 40 may include one first light receiving element (imaging element) 41B, one second light receiving element (imaging element) 41G, one third light receiving element (imaging element) 41R, and one fourth light receiving element (imaging element) 41IR. The first light receiving element 41B, the second light receiving element 41G, the third light receiving element 41R, and the fourth light receiving element 41IR may be arranged in a line in this order in the main scanning direction D1.

As illustrated in FIG. 8, the first light receiving element 41B may include a photodetector 43 and the color filter 42B, the second light receiving element 41G may include the photodetector 43 and the color filter 42G, the third light receiving element 41R may include the photodetector 43 and the color filter 42R, and the fourth light receiving element 41IR may include the photodetector 43 and the color filter 42IR.

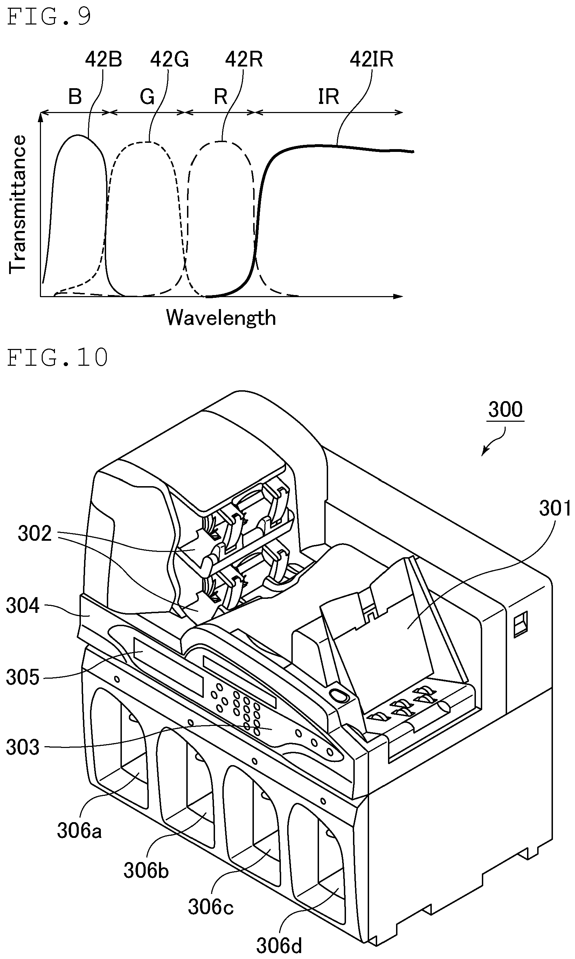

As illustrated in FIG. 9, the color filter 42B transmits blue light, the color filter 42G transmits green light, the color filter 42R transmits red light, but the color filter 42B, the color filter 42G, and the color filter 42R do not transmit infrared light. Therefore, the first light receiving element 41B, the second light receiving element 41G, and the third light receiving element 41R receive only corresponding visible light but do not receive infrared light. The color filter 42B absorbs green light, red light, and infrared light. The color filter 42G absorbs blue light, red light, and infrared light. The color filter 42R absorbs blue light, green light, and infrared light. The color filter 42IR transmits infrared light but does not transmit visible light and absorbs the visible light.

Therefore, the light receiving unit 13 separates a fluorescent component in a visible range and a fluorescent component in an infrared range, the components being emitted from the special fluorescent ink, then independently receives the light, and outputs signal values that depends on the light amounts of the respective components. Thus, spectral overlap correction is unnecessary.

Also in the present embodiment, as described in the first embodiment, authentication of special fluorescent ink may be made using a fluorescence emission ratio.

In this case, for example, a visible fluorescence emission amount (for example, an output value from the first light receiving element 41B, the second light receiving element 41G, or the third light receiving element 41R) of a specific color and an infrared fluorescence emission amount (for example, an output value from the fourth light receiving element 41IR) of a genuine banknote may be acquired from a fluorescence detection signal obtained by the light receiving unit 13 receiving fluorescence emitted from the genuine banknote irradiated with ultraviolet light. A fluorescence emission ratio may be then calculated, and may be used as the reference data.

(Fourth Embodiment)

A sheet handling device according to the present embodiment may have, for example, a configuration illustrated in FIG. 10. A sheet handling device 300 illustrated in FIG. 10 is a small sheet handling device installed and used on a table. This device includes a sheet recognition unit (not illustrated in FIG. 10), a hopper 301, two rejection units 302, an operation unit 303, four stacking units 306a to 306d, and a display unit 305. The sheet recognition unit executes banknote recognition processing. On the hopper 301, a plurality of banknotes to be handled is placed in a stacked state. The rejection units 302 reject a rejection banknote when the banknote fed from the hopper 301 into a housing 304 is a rejection banknote, such as a counterfeit note or a suspect note.

The operation unit 303 is for inputting an instruction from an operator. The stacking units 306a to 306d are for sorting and stacking banknotes whose denominations, authenticity, and fitness have been recognized in the housing 304. The display unit 305 is for displaying information such as recognition and counting results of banknotes and the stacking statuses of the stacking units 306a to 306d. Among the four stacking units 306a to 306d, fit notes are stored in the stacking units 306a to 306c, and soiled notes are stored in the stacking unit 306d based on the result of the fitness determination by the sheet recognition unit. A method for distributing banknotes into the stacking units 306a to 306d can be optionally set.

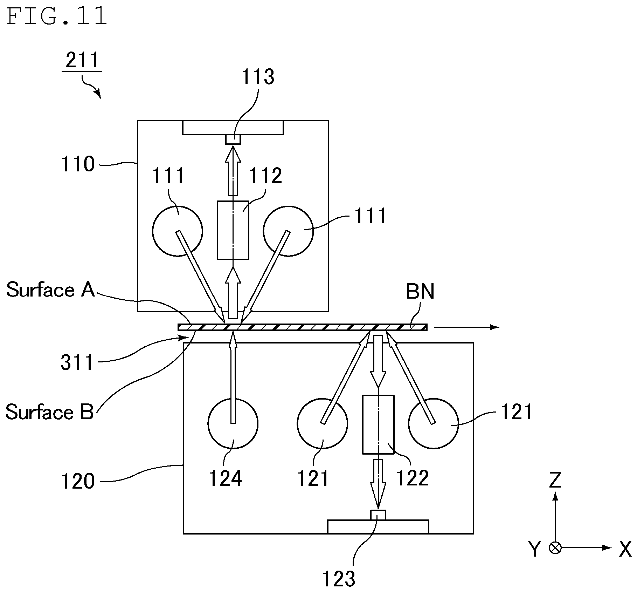

A configuration of an imaging unit that is a main unit of the sheet recognition unit according to the present embodiment will be described below with reference to FIG. 11. As illustrated in FIG. 11, an imaging unit 211 includes an upper unit 110 and a lower unit 120 disposed to face each other. A gap through which a banknote BN is transported in an X direction in an XY plane is formed between the upper unit 110 and the lower unit 120 separated from each other in a Z direction. This gap constitutes a part of a transport path of the sheet handling device according to the present embodiment. The upper unit 110 and the lower unit 120 are positioned on the upper side (+Z direction) and the lower side (-Z direction) of the transport path, respectively. The Y direction corresponds to a main scanning direction of the imaging unit 211, and the X direction corresponds to a sub-scanning direction of the imaging unit 211.

As illustrated in FIG. 11, the upper unit 110 includes two light sources 111 for reflection, a condensing lens 112, and a light receiving unit 113. The light source 111 for reflection sequentially irradiates a main surface (hereinafter, surface A) of the banknote BN on the light receiving unit 113 side with irradiation light, specifically, infrared light, white light including red light, green light, and blue light, and ultraviolet light as excitation light for fluorescence having different wavelength bands. The condensing lens 112 condenses light emitted from the light source 111 for reflection and reflected from the surface A of the banknote BN, light emitted from a light source 124 for transmission disposed in the lower unit 120 and transmitted through the banknote BN, and fluorescence emitted on the surface A of the banknote BN. The light receiving unit 113 receives the light condensed by the condensing lens 112 and converts the light into an electric signal. After the electric signal is amplified, the electric signal is A-D converted into digital data and then the digital data is output. Here, the light received by the light receiving unit is also referred to as incident light, and the light emitted from the light source is also referred to as irradiation light.

The lower unit 120 includes two light sources 121 for reflection, one light source 124 for transmission, a condensing lens 122, and a light receiving unit 123. The light source 121 for reflection sequentially irradiates a main surface (hereinafter, surface B) of the banknote BN on the light receiving unit 123 side with irradiation light having different wavelength bands, specifically, infrared light, white light including red light, green light, and blue light, and ultraviolet light as excitation light for fluorescence. The condensing lens 122 condenses light emitted from the light source 121 for reflection and reflected from the surface B of the banknote BN, and the fluorescence emitted on the surface B of the banknote BN. The light receiving unit 123 receives the light condensed by the condensing lens 122 and converts the light into an electric signal. After the electric signal is amplified, the electric signal is A-D converted into digital data and then the digital data is output.

The light source 124 for transmission is disposed on an optical axis of the condensing lens 112 of the upper unit 110. The light emitted from the light source 124 for transmission is partially transmitted through the banknote BN, is condensed by the condensing lens 112 of the upper unit 110, and is detected by the light receiving unit 113. The light source 124 for transmission may sequentially or simultaneously irradiate the surface B of the banknote BN with irradiation light having different wavelength bands.

In this specification, light having different wavelength bands (irradiation light, incident light, etc.) is, for example, light having different colors as visible light, and is light having wavelength bands partially overlapping or light having non-overlapping wavelength bands as infrared light and ultraviolet light.

Each of the light sources 111, 121, and 124 includes a linear transparent material (not illustrated) extending in a direction (main scanning direction D1) perpendicular to the sheet surface of FIG. 11, and a plurality of light-emitting diode (LED) elements (not illustrated) disposed at both ends (or one end) of the transparent material.

Each of the light sources 111 and 121 may include an LED element that emits infrared light having a peak wavelength of 750 nm or more, an LED element that emits red light (R) having a peak wavelength of 600 nm or more and less than 750 nm, an LED element that emits green light (G) having a peak wavelength of 500 nm or more and less than 600 nm, an LED element that emits blue light (B) having a peak wavelength of 400 nm or more and less than 500 nm, and an LED element that emits ultraviolet light (UV) having a peak wavelength of less than 400 nm. One light source 111 is disposed on each of the upstream side and downstream side in the transport direction with the condensing lens 112 being interposed therebetween. One light source 121 is disposed on each of the upstream side and downstream side in the transport direction with the condensing lens 122 being interposed therebetween.

The light source 124 may include a plurality of LED elements that emit light having peak wavelengths different from each other. Note that the peak wavelength means a wavelength at which light emission intensity is maximum.

As illustrated in FIG. 5, each of the light receiving units 113 and 123 includes a plurality of pixels 30 arranged in a line in the main scanning direction D1(direction orthogonal to the transport direction of the banknote BN, i.e. the Y direction). Each pixel 30 includes one first light receiving element (imaging element) 31B, one second light receiving element (imaging element) 31G, and one third light receiving element (imaging element) 31R. Further, the first light receiving element 31B, the second light receiving element 31G, and the third light receiving element 31R are disposed in a line along the main scanning direction D1 in this order.

Each of the upper unit 110 and the lower unit 120 repeatedly images the banknote BN transported in the transport direction and outputs a signal that depends on a light receiving amount. As a result, the imaging unit 211 acquires an image of the entire banknote BN. Specifically, the imaging unit 211 acquires a transmissive image of the banknote BN and a reflective image of the surface A based on the output signal from the upper unit 110, and acquires a reflective image of the surface B of the banknote BN based on the output signal from the lower unit 120.

The imaging unit 211 further acquires a fluorescence detection signal for the entire banknote BN on each of the surface A and the surface B of the banknote BN. That is, the imaging unit 211 can acquire the fluorescent images of the surface A and the surface B of the banknote BN.

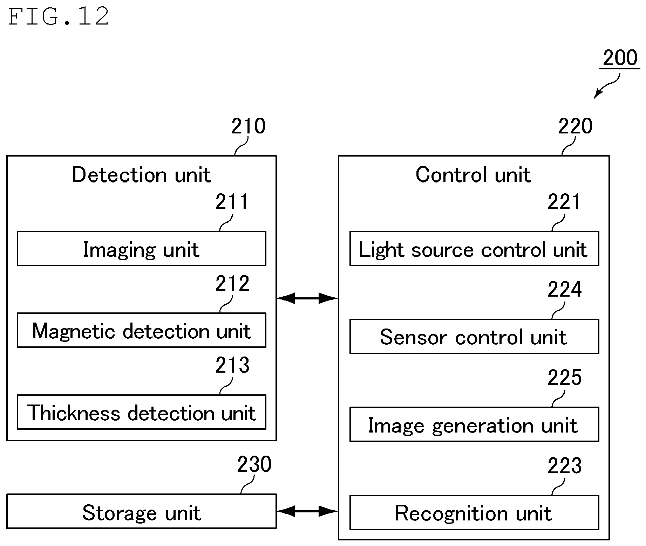

A configuration of the sheet recognition unit according to the present embodiment will be described below with reference to FIG. 12. As illustrated in FIG. 12, a sheet recognition unit 200 according to the present embodiment includes a detection unit 210, a control unit 220, and a storage unit 230.

The control unit 220 is a controller that controls respective units of the sheet recognition unit 200. The control unit includes a program for implementing various types of processing stored in the storage unit 230, a central processing unit (CPU) that executes the program, and various types of hardware (for example, a field programmable gate array (FPGA)) controlled by the CPU. The control unit 220 controls respective units of the sheet recognition unit 200 based on signals output from the respective units of the sheet recognition unit 200 and control signals from the control unit 220 in accordance with the program stored in the storage unit 230. The control unit 220 further has functions of a light source control unit 221, a sensor control unit 224, an image generation unit 225, and a recognition unit 223 in accordance with a program stored in the storage unit 230.

The detection unit 210 includes a magnetic detection unit 212 and a thickness detection unit 213 in addition to the above-described imaging unit 211 along the transport path of a banknote. The imaging unit 211 images a banknote and outputs an image signal (image data) as described above. The magnetic detection unit 212 includes a magnetic sensor (not illustrated) that measures magnetism. The magnetic sensor detects magnetism of magnetic ink, a security thread, etc. printed on a banknote. The magnetic sensor is a magnetic line sensor in which a plurality of magnetic detection elements is arranged in a line. The thickness detection unit 213 includes a thickness detection sensor (not illustrated) that measures a thickness of a banknote. The thickness detection sensor detects tape, multi feed, etc.. As for the thickness detection sensor, a sensor disposed at each roller detects a displacement amount during passing of a banknote at rollers facing each other with the transport path interposed therebetween.

The storage unit 230 includes a nonvolatile storage device such as a semiconductor memory or a hard disk, and stores various programs and various data for controlling the sheet recognition unit 200. The storage unit 230 further stores, as imaging parameters, a wavelength band of irradiation light emitted from each of the light sources 111, 121, and 124 during one cycle of imaging by the imaging unit 211, a timing of turning on and off each of the light sources 111, 121, and 124, a value of a forward current flowing through the LED elements of each of the light sources 111, 121, and 124, a timing of reading a signal from each of the upper unit 110 and the lower unit 120, and the like.

Note that the imaging in one cycle refers to an imaging pattern in which the wavelength band of the irradiation light emitted from each of the light sources 111, 121, and 124, and the timing of turning on and off each of the light sources 111, 121, and 124, and signal reading are set. An image of the entire banknote is acquired by continuously and repeatedly executing the imaging in one cycle as one period.

The light source control unit 221 makes dynamic lighting control of each of the light sources 111, 121, and 124 in order to capture an individual image of a banknote obtained using each of the light sources 111, 121, and 124. Specifically, the light source control unit 221 controls turning-on and turning-off of the light sources 111, 121, and 124 based on the timing set as the imaging parameter. This control is made using a mechanical clock that changes depending on the transport speed of a banknote and a system clock that is always output at a constant frequency regardless of the transport speed of a banknote.

The sensor control unit 224 controls a timing of reading a signal from each of the upper unit 110 and the lower unit 120 based on the timing set as the imaging parameter, and reads a signal from each of the upper unit 110 and the lower unit 120 in synchronization with the timing of turning on and off the light sources 111, 121, and 124. This control is performed using the mechanical clock and the system clock. The sensor control unit 224 then sequentially stores the read signals, that is, the line data in a ring buffer (line memory) of the storage unit 230.

The line data means data based on a signal obtained by each of the upper unit 110 and the lower unit 120 performing one imaging, and corresponds to data for one row in a horizontal direction (direction orthogonal to the transport direction of a banknote, i.e., the Y direction) of the acquired image.

The image generation unit 225 has a function of generating an image based on various signals related to a banknote acquired from the detection unit 210. Specifically, the image generation unit 225 first decomposes the data (image signal) stored in the ring buffer into data for each condition of light irradiation and light reception. The image generation unit 225 then executes correction processing for cutting a dark output, adjusting gain, and correcting a bright output level in accordance with the characteristic of each piece of decomposed data, generates various types of image data of the banknote, and stores the image data in the storage unit 230.

The recognition unit 223 makes spectral overlap correction on the fluorescence detection signal acquired by imaging unit 211. For example, the fluorescence detection signal corresponding to a recognition target portion of the fluorescent image is corrected based on the correction formula expressed in the above Formulas (3) or (6). As a result, the visible fluorescence emission amount of a specific color and the infrared fluorescence emission amount of the banknote to be recognized are calculated. The recognition target portion may be set appropriately for the denomination of a banknote.

The recognition unit 223 then authenticates the banknote BN to be recognized, based on whether the visible fluorescence emission amount and the infrared fluorescence emission amount of the banknote BN to be recognized are within an allowable range with respect to the reference data related to a visible fluorescence emission amount and an infrared fluorescence emission amount in a genuine banknote.

(First Modification)

In the above embodiments, the inverse matrix $B^{-1}$ or $D^{-1}$ may be stored as the correction value, but the matrix B or D may be stored as the correction value. In this case, after the inverse matrix $B^{-1}$ or $D^{-1}$ of the matrix B or D stored in the storage unit is calculated, the fluorescence detection signal collected from a banknote to be recognized can be multiplied by the inverse matrix $B^{-1}$ or $D^{-1}$.

(Second Modification)

In the above embodiments, the matrix A or C may be stored as the correction value. In this case, after the matrix B or D is calculated based on the matrix A or C stored in the storage unit and the inverse matrix $B^{-1}$ or $D^{-1}$ of the matrix B or D is calculated, a fluorescence detection signal collected from a banknote to be recognized can be multiplied by the inverse matrix $B^{-1}$ or $D^{-1}$.

(Third Modification)

In the above embodiments, not a matrix but an expansion formula of an operation using the matrix may be stored as the correction value. Specifically, the expansion formula of the above Formula (3) or (6) may be stored. In this case, the fluorescence detection signal collected from a banknote to be recognized can be substituted into the expansion formula.

(Fourth Modification)

In the above embodiments, visible fluorescent ink of a specific color and infrared fluorescent ink to be references are measured in advance and a correction value is calculated. However, the visible fluorescent ink and the infrared fluorescent ink may be contained inside the device. For example, visible fluorescent ink of a specific color and infrared fluorescent ink to be references may be respectively printed at a predetermined position in a sheet recognition unit, for example, in regions outside the transport path of a banknote to be recognized. Fluorescence emitted from the printed pattern of the visible fluorescent ink, fluorescence emitted from the printed pattern of the infrared fluorescent ink, and fluorescence emitted from the banknote to be recognized may be simultaneously received by different light receiving elements (or pixels) of a light receiving unit. A correction value may be calculated by using a fluorescence detection signal obtained by receiving the fluorescence emitted from the printed pattern of the visible fluorescent ink and the fluorescence emitted from the printed pattern of the infrared fluorescent ink, and may be used during execution of recognition processing on the banknote to be recognized.

(Fifth Modification)

In the above embodiments, the case where fluorescence is detected as photoluminescence has been described, but phosphorescence (photoluminescence that can be detected after excitation light is turned off) may be used. In this case, a light receiving unit receives phosphorescence emitted from a banknote to be recognized after ultraviolet light as excitation light is turned off. A phosphorescence detection signal is then output. Similarly to the fluorescence detection signal, the recognition processing can be executed using the phosphorescence detection signal. For example, the banknote to be recognized can be recognized based on whether visible phosphorescence emission amount and an infrared phosphorescence emission amount of the banknote to be recognized are within an allowable range with respect to reference data related to a visible phosphorescence emission amount and an infrared phosphorescence emission amount in a genuine banknote. This makes it possible to authenticate the phosphorescent ink (special phosphorescent ink) that emits phosphorescence in a predetermined wavelength band including at least a visible range and an infrared range after ultraviolet light as excitation light is emitted. Similarly to the special fluorescent ink, the special phosphorescent ink can also function as a security element with high security because a phosphorescent component that emits light in the infrared region cannot be visually recognized by human eyes.

Although the embodiments have been described above with reference to the drawings, the present disclosure is not limited to the above embodiments. The configurations of the respective embodiments may be appropriately combined or modified without departing from the gist of the present disclosure.

As described above, the present disclosure is a technique useful for recognizing a highly secure sheet using a photoluminescent compound.

REFERENCE SIGNS LIST

1, 200: sheet recognition unit
11, 111, 121, 124: light source
13, 113, 123: light receiving unit
23, 223: recognition unit
30, 40: pixel
31B, 31G, 31R, 41B, 41G, 41R, 41IR: light receiving element
32B, 32G, 32R, 42B, 42G, 42R, 42IR: color filter
33, 43: photodetector
110: upper unit
112, 122: condensing lens
120: lower unit
210: detection unit
211: imaging unit
212: magnetic detection unit
213: thickness detection unit
220: control unit
221: light source control unit
224: sensor control unit
225: image generation unit
230: storage unit
300: sheet handling device
301: hopper
302: rejection unit
303: operation unit
304: housing
305: display unit
306a to 306d: stacking unit
BN: banknote

**Claims**

1. A sheet recognition unit, comprising:

a light source capable of emitting at least ultraviolet light to a sheet to be recognized;

a light receiving unit that receives photoluminescence emitted from the sheet to be recognized, the sheet being irradiated with the ultraviolet light, and outputs a photoluminescence detection signal; and

a recognition unit that recognizes the sheet to be recognized using the photoluminescence detection signal output from the light receiving unit, based on whether a visible photoluminescence emission amount and an infrared photoluminescence emission amount of the sheet to be recognized are within an allowable range with respect to reference data related to a visible photoluminescence emission amount and an infrared photoluminescence emission amount in a genuine sheet.

2. The sheet recognition unit according to claim 1,

wherein the reference data includes a ratio between the visible photoluminescence emission amount and the infrared photoluminescence emission amount, and

wherein the recognition unit calculates a ratio between the visible photoluminescence emission amount and the infrared photoluminescence emission amount of the sheet to be recognized, and recognizes the sheet to be recognized, based on whether the ratio is within an allowable range with respect to the ratio included in the reference data.

3. The sheet recognition unit according to claim 1 or 2,

wherein the light receiving unit receives photoluminescence of at least one color of blue, green, or red as the visible photoluminescence and outputs a photoluminescence detection signal of the at least one color,

wherein the reference data relates to the photoluminescence emission amount of the at least one color and the infrared photoluminescence emission amount, and

wherein the recognition unit recognizes the sheet to be recognized, based on whether the photoluminescence emission amount of the at least one color and the infrared photoluminescence emission amount of the sheet to be recognized are within the allowable range with respect to the reference data.

4. The sheet recognition unit according to claim 3,

wherein the light receiving unit receives green photoluminescence as the visible photoluminescence and outputs a green photoluminescence detection signal,

wherein the reference data relates to a green photoluminescence emission amount and the infrared photoluminescence emission amount, and

wherein the recognition unit recognizes the sheet to be recognized, based on whether the green photoluminescence emission amount and the infrared photoluminescence emission amount of the sheet to be recognized are within the allowable range with respect to the reference data.

5. The sheet recognition unit according to claim 3,

wherein the light receiving unit receives red photoluminescence as the visible photoluminescence and outputs a red photoluminescence detection signal,

wherein the reference data relates to a red photoluminescence emission amount and the infrared photoluminescence emission amount, and

wherein the recognition unit recognizes the sheet to be recognized, based on whether the red photoluminescence emission amount and the infrared photoluminescence emission amount of the sheet to be recognized are within the allowable range with respect to the reference data.

6. The sheet recognition unit according to any one of claims 1 to 5,
wherein the light receiving unit includes a first light receiving element having a color filter that transmits blue light and infrared light, a second light receiving element having a color filter that transmits green light and infrared light, and a third light receiving element having a color filter that transmits red light and infrared light.

7. The sheet recognition unit according to claim 6,
wherein the recognition unit corrects the photoluminescence detection signal obtained by the light receiving unit receiving the photoluminescence emitted from the sheet to be recognized irradiated with the ultraviolet light using a correction value based on a photoluminescence detection signal obtained by the light receiving unit alone receiving photoluminescence emitted from visible photoluminescent ink that emits visible photoluminescence of a specific color and photoluminescence emitted from infrared photoluminescent ink that emits infrared photoluminescence to calculate a visible photoluminescence emission amount of a specific color and the infrared photoluminescence emission amount of the sheet to be recognized, and recognizes the sheet to be recognized based on whether the visible photoluminescence emission amount of the specific color and the infrared photoluminescence emission amount are within the allowable range with respect to the reference data.

8. The sheet recognition unit according to claim 7,
   wherein the correction value is based on output values from two light receiving elements selected from the first light receiving element, the second light receiving element, or the third light receiving element.

9. The sheet recognition unit according to claim 8,

   wherein one of the two light receiving elements is, among the first light receiving element, the second light receiving element, and the third light receiving element, a light receiving element that outputs a maximum value when receiving the photoluminescence emitted from the visible photoluminescent ink, and
   wherein the other one of the two light receiving elements is, among the first light receiving element, the second light receiving element, and the third light receiving element, a light receiving element that outputs a maximum value when receiving the photoluminescence emitted from the infrared photoluminescent ink.

10. The sheet recognition unit according to claim 9,
    wherein the correction value is based on: a matrix with two rows and two columns including output values obtained by the two light receiving elements respectively receiving the photoluminescence emitted from the visible photoluminescent ink and the photoluminescence emitted from the infrared photoluminescent ink; a matrix obtained by normalizing the matrix with two rows and two columns; an inverse matrix of the matrix with two rows and two columns; or an inverse matrix of the normalized matrix.

11. The sheet recognition unit according to claim 7,

    wherein in a case where a light receiving element that outputs a maximum value when receiving the photoluminescence emitted from the visible photoluminescent ink is identical to a light receiving element that outputs a maximum value when receiving the photoluminescence emitted from the infrared photoluminescent ink, the light receiving element is a light receiving element P,
    the first light receiving element, the second light receiving element, and the third light receiving element respectively output values a, b, and c when the light receiving unit receives the photoluminescence emitted from the visible photoluminescent ink,
    the first light receiving element, the second light receiving element, and the third light receiving element respectively output values d, e, and f when the light receiving unit receives the photoluminescence emitted from the infrared photoluminescent ink, and
    the correction value is based on an output value from the light receiving element P and a combination of addition values indicating a largest difference among differences between the addition values of the output values a to f (d + e) - (a + b), (e + f) - (b + c), (d + f) - (a + c), and (d + e + f) - (a + b + c).

12. The sheet recognition unit according to claim 11,
    wherein the correction value is based on: a matrix with two rows and two columns including an output value obtained by the light receiving element P alone receiving the photoluminescence emitted from the visible photoluminescent ink and the photoluminescence emitted from the infrared photoluminescent ink, and the combination of the addition values indicating the largest difference; a matrix obtained by normalizing the matrix with two rows and two columns; an inverse matrix of the matrix with two rows and two columns; or an inverse matrix of the normalized matrix.

13. The sheet recognition unit according to any one of claims 1 to 5,
    wherein the light receiving unit includes a first light receiving element having a color filter that transmits blue light, a second light receiving element having a color filter that transmits green light, a third light receiving element having a color filter that transmits red light, and a fourth light receiving element having a color filter that transmits infrared light.

14. A sheet recognition method, comprising:

    emitting at least ultraviolet light to a sheet to be recognized from a light source;
    receiving, with a light receiving unit, photoluminescence emitted from the sheet to be recognized, the sheet being irradiated with the ultraviolet light, and outputting a photoluminescence detection signal; and
recognizing the sheet to be recognized by using the photoluminescence detection signal output from the light receiving unit, based on whether a visible photoluminescence emission amount and an infrared photoluminescence emission amount of the sheet to be recognized are within an allowable range with respect to reference data related to a visible photoluminescence emission amount and an infrared photoluminescence emission amount in a genuine sheet.

**15.** A sheet recognition program causing a sheet recognition unit to perform operations comprising:

emitting at least ultraviolet light to a sheet to be recognized from a light source;
receiving, with a light receiving unit, photoluminescence emitted from the sheet to be recognized, the sheet being irradiated with the ultraviolet light, and outputting a photoluminescence detection signal; and
recognizing the sheet to be recognized by using the photoluminescence detection signal output from the light receiving unit, based on whether a visible photoluminescence emission amount and an infrared photoluminescence emission amount of the sheet to be recognized are within an allowable range with respect to reference data related to a visible photoluminescence emission amount and an infrared photoluminescence emission amount in a genuine sheet.

FIG.1

R

FIG.2

R

FIG.3

FIG.4

| | |
|---|---|
| Emit ultraviolet light | S11 |

| | |
|---|---|
| Output fluorescence detection signal | S12 |

| | |
|---|---|
| Recognize | S13 |

FIG.5

FIG.6

FIG.7

FIG.8

## FIG.9

## FIG.10

FIG.11

FIG.12

200

210

Detection unit

211
Imaging unit

212
Magnetic detection unit

213
Thickness detection unit

230
Storage unit

220

Control unit

221
Light source control unit

224
Sensor control unit

225
Image generation unit

223
Recognition unit

Europäisches
Patentamt

European
Patent Office

Office européen
des brevets

# EUROPEAN SEARCH REPORT

**Application Number**

EP 25 19 8590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/115139 A1 (JOSHI MURLI M [IN] ET AL) 1 June 2006 (2006-06-01) <br> * paragraph [0038] - paragraph [0166] * <br> * figures 1-5 * <br> * claims 1-41 * <br> ----- | 1-15 | INV. <br> G07D7/00 <br> G07D7/1205 |
| X | US 2014/168719 A1 (MIURA JUNJI [JP] ET AL) 19 June 2014 (2014-06-19) <br> * paragraph [0021] - paragraph [0102] * <br> * figures 1-8 * <br> ----- | 1-15 | |
| A | JP 2016 009445 A (VIENEX CORP) 18 January 2016 (2016-01-18) <br> * paragraph [0003] - paragraph [0051] * <br> * figures 1-7 * <br> ----- | 1-15 | |
| A | US 2023/282053 A1 (TAKEHARA DAIKI [JP] ET AL) 7 September 2023 (2023-09-07) <br> * paragraph [0003] - paragraph [0036] * <br> ----- | 1-15 | |

**TECHNICAL FIELDS SEARCHED (IPC)**

G07D

The present search report has been drawn up for all claims

| Place of search | Date of completion of the search | Examiner |
|---|---|---|
| The Hague | 20 January 2026 | Seifi, Mozhdeh |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 8590

20-01-2026

| Patent document cited in search report | Publication date | Patent family member(s) | Publication date |
|---|---|---|---|
| US 2006115139 A1 | 01-06-2006 | CA 2559102 A1 | 15-09-2005 |
| | | CN 1950857 A | 18-04-2007 |
| | | EP 1730705 A1 | 13-12-2006 |
| | | KR 20060131966 A | 20-12-2006 |
| | | US 2006115139 A1 | 01-06-2006 |
| | | WO 2005086100 A1 | 15-09-2005 |
| US 2014168719 A1 | 19-06-2014 | CN 103685830 A | 26-03-2014 |
| | | EP 2711901 A1 | 26-03-2014 |
| | | JP 5989475 B2 | 07-09-2016 |
| | | JP 2014064051 A | 10-04-2014 |
| | | US 2014168719 A1 | 19-06-2014 |
| JP 2016009445 A | 18-01-2016 | JP 6469370 B2 | 13-02-2019 |
| | | JP 2016009445 A | 18-01-2016 |
| US 2023282053 A1 | 07-09-2023 | AU 2021377577 A1 | 06-07-2023 |
| | | EP 4246126 A1 | 20-09-2023 |
| | | JP 7473677 B2 | 23-04-2024 |
| | | JP WO2022102583 A1 | 19-05-2022 |
| | | US 2023282053 A1 | 07-09-2023 |
| | | WO 2022102583 A1 | 19-05-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6469370 B

- JP 7473677 B